# EUROPÄISCHE PATENTSCHRIFT

(11) **EP 0 416 310 B1**
(45) Veröffentlichungstag und Bekanntmachung des Hinweises auf die Patenterteilung: **01.09.1993**
(21) Anmeldenummer: 90115271.0
(22) Anmeldetag: 09.08.1990
(51) Int. Cl.: B62D 61/12

(54) **Anhebbares Doppelachsaggregat**
Liftable turn axle unit
Unité d'essieu tandem levable

(30) Priorität: 07.09.1989 DE 3929788
(43) Veröffentlichungstag der Anmeldung: 13.03.1991
(73) Patentinhaber: MAN Nutzfahrzeuge Aktiengesellschaft, 80976 München (DE)
(72) Erfinder: Hirschmann, Rudolf, D-8044 Unterschleissheim (DE); Stummer, Josef, D-8000 München 45 (DE)

(56) Entgegenhaltungen:
- BE-A- 548 526
- DE-A- 1 555 685
- DE-A- 2 740 264
- DE-A- 3 428 867
- DE-B- 1 297 491
- GB-A- 2 164 007

## Beschreibung

Die Erfindung bezieht sich auf ein Nutzfahrzeug, insbesondere Lkw, mit einem Doppelachsaggregat an pendelnd aufgehängten Blattfedern, dessen eine Achse als Triebachse antreibbar und dessen andere Achse als Liftachse über Luftfederbälge anhebbar ist, mit Lenkerführung für die Achsen und mit Blattfederstützlagern, wobei die Liftachse, über Lastsensoren gesteuert, graduell anhebbar ist.

Nach der DE-A-3 428 867 sind Nutzfahrzeuge mit mindestens einem Doppelachsaggregat mit lenkergeführten Achsen bekannt, dessen eine Achse antreibbar und dessen andere Achse anhebbar ist, wobei die anhebbare Achse durch Änderung des Luftdruckes von Luftfederbälgen graduell über Lastsensoren entlastbar ausgebildet ist. Solcherart ist die Traktion der Räder der Triebachse vergrößerbar. Eine Ausführung mit einem Doppelaggregat an pendelnd aufgehängten Blattfedern zeigt die DE-A-1 555 685.

Der Erfindung liegt die Aufgabe zugrunde, die Traktion der Räder der angetriebenen Achse wie auch die Seitenführungsfähigkeit der Lenkachse abhängig von Fahrsituation und Beladung ausgleichend zu optimieren.

Dies wird erfindungsgemäß dadurch erreicht, daß Lastsensoren am Doppelachsaggregat zwischen den Achslagern und den Achsfederstützlagern von Triebachse und Liftachse, an der Abstützung der Luftfederbälge zum Rahmenlängsträger und im Bereich der lenkbaren Vorderachse an den Federstützlagern der dortigen Blattfedern angeordnet sind, daß die Lastsensoren die partielle Belastung der einzelnen Achsen feststellen, und daß eine Steuerung in Auswertung der von den Lastsensoren gelieferten Daten eine gezielt ausgleichende Be- bzw. Entlastung der Achsen im Sinne einer als solches bekannten Anfahrhilfe und einer Verbesserung der Seitenführungsfähigkeit der lenkbaren Vorderachse bewirkt.

Solcherart entsteht ein komplettes System, das die Belastung des Gesamtwagens erfaßt und in Abhängigkeit von der jeweiligen Belastungs- und/oder Straßensituation für optimalen Ausgleich auf die Einzelachsen sorgt und eine hinreichend gute Traktion der Antriebsräder des Doppelachs-aggregates ermöglicht. Für das Anheben der anhebbaren Achse bzw. das Maß der Anhebung ist nicht nur der an der Triebachse des Doppelachsaggregates über die Lastsensoren ermittelte Wert, sondern auch der Belastungswert an der Vorderachse von Bedeutung. Würde z.B. ein Fahrzeug voll- oder teilbeladen sein, mit Lastschwerpunktverschiebung nach hinten, so könnte ein volles oder graduelles Absenken der Liftachse erforderlich werden, um einen genügenden, zum Lenken notwendigen Druck auf die Vorderräder zu bekommen. Dazu muß aber die Belastungsinformation der lenkbaren Vorderräder vorliegen. Ebenfalls in die Gesamtbewertung mit einbezogen werden muß die an den Luftfederbälgen anliegende Belastung. Die ortsdefinierte Anordnung der Lastsensoren einerseits am Doppel-achsaggregat zwischen Achslager und Achsfederstützlager sowie an der Vorderachse im Bereich der Blattfederstützlager bewirkt, daß gerade an diesen Stellen alle Störeinflüsse auf die Lastsensoren, wie Relativbewegungen zwischen den Federn, Schraubenvorspannungen und dergleichen, ausgeschaltet sind.

Nach einem ergänzenden Merkmal der Erfindung ist der Luftdruck in den Federbälgen in Stufen oder stufenlos veränderbar. Hieraus ergibt sich in Ergänzung zu den vorhergehenden Ausführungen eine sehr feinfühlige Einstellung der optimalen Traktion und der optimalen Lastverhältnisse für alle Achsen.

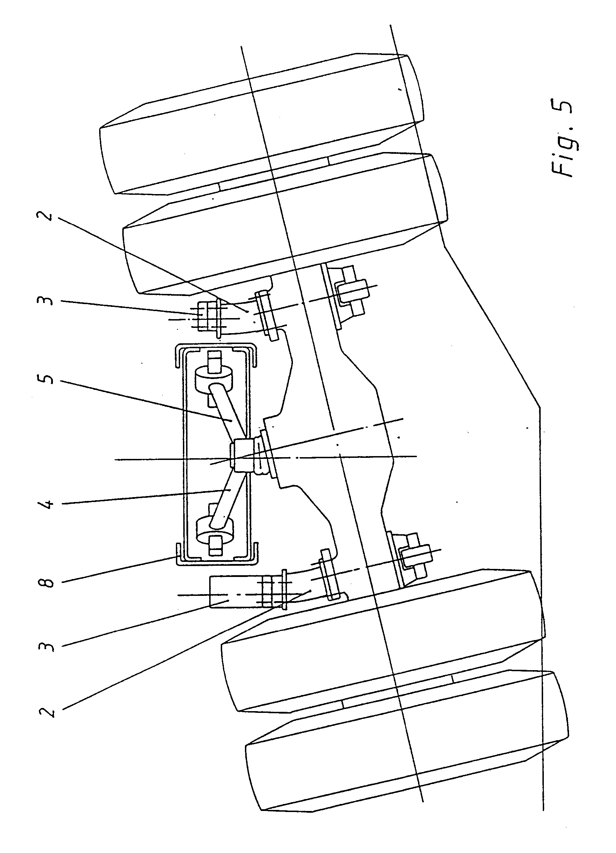

Nach einem besonders wesentlichen Merkmal der Erfindung weisen in Anwendung auf ein anhebbares Aggregat die die von der anhebbaren Achse ausgehenden Belastungen tragenden Blattfederstützlagern zwischen den Montageplatten durch Stabilisierungsbleche getrennte, an diese anvulkanisierte Gummischichten auf, wobei die Stabilisierungsbleche wie auch die dazwischenliegenden Gummischichten kugelkalottenförmig gestaltet sind. Durch die Kugelkalottenform oder eine ähnliche Ausführung der Stabilisierungsbleche und Gummischichten werden im Blattfederstützlager Rückstellkräfte aus der Relativverschiebung - siehe auch Fig. 5 - vermindert. Im Stützlager findet im wesentlichen eine Schubverformung statt. Durch die geringen Rückstellmomente werden Fahrzeugbauteile und Fahrbahn entlastet. Bei Fahrten mit angehobener Achse und bei gleichzeitiger Überlastung der Antriebsaggregate gewährleisten die Blattfederstützlager durch ihre erfindungsgemäße Bauart und Selbstzentrierung höchste Eigenstabilität. Aus Fig. 5 ist eine Achse mit zusätzlicher, einseitiger Einfederung zu ersehen. Parabelfedern mit dünn ausgewalzten Enden und querweichen Federn (GFK), wie sie üblicherweise in Doppelachsaggregaten verwendet werden, können keine hohen Torsionsbelastungen am Federende aufnehmen. Durch die kugelkalottenförmige Ausgestaltung des bekannten Blattfederstützlagers wird eine Torsionsbelastung an den Federenden weitgehend vermieden.
Die Erfindung ist anhand eines Ausführungsbeispieles dargestellt und beschrieben.

Es zeigen:
- Fig. 1: einen Lkw mit Doppelachsaggregat, wobei die Räder beider Achsen am Boden aufliegen, in schematischer Seitenansicht,
- Fig. 2: einen Lkw mit Doppelachsaggregat und angehobener Hubachse in schematischer Seitenansicht,
- Fig. 3: ein Doppelachsaggregat in Seitenansicht,
- Fig. 4: ein Doppelachsaggregat in der Draufsicht,
- Fig. 5: eine Achse mit einseitiger Einfederung in der Rückansicht,
- Fig. 6: ein Blattfederstützlager als Einzelheit,
- Fig. 7: ein Diagramm der Achslastverteilung und Traktion.

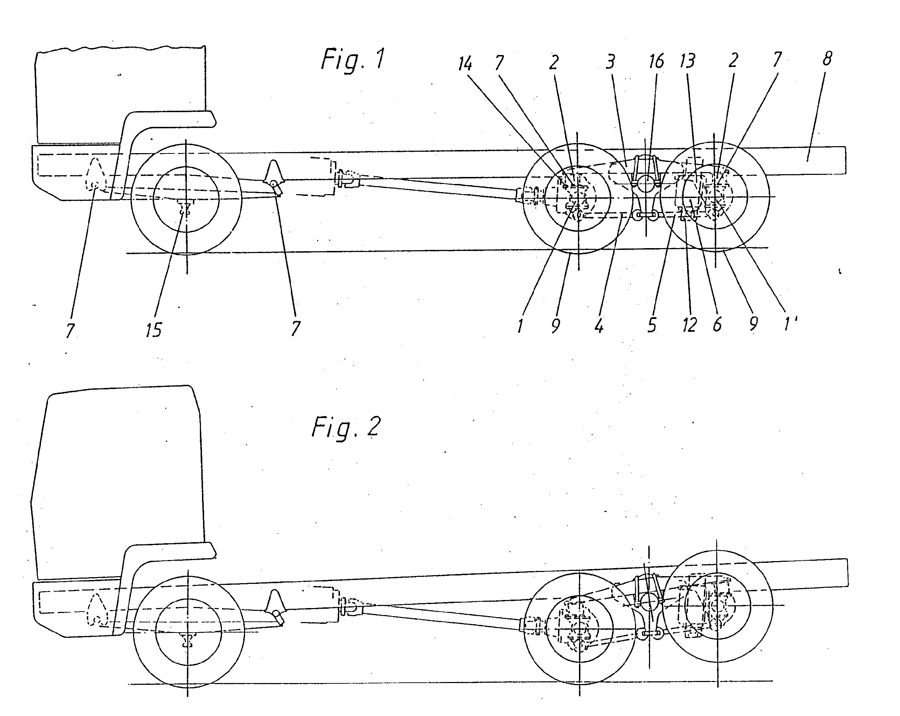

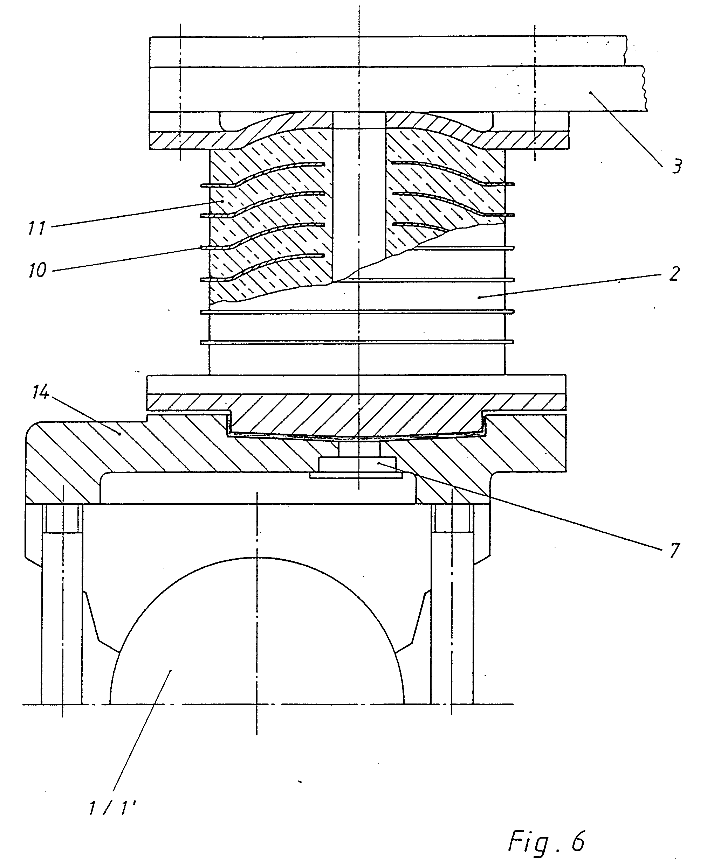

Fig. 1 zeigt einen Lkw in Seitenansicht ohne Aufbau. Im hinteren Bereich des Lkw's ist ein Doppelachsaggregat mit den Achsen 1 und 1' angeordnet. Die Achsen mit entsprechenden Achslagern 14 und Blattfederstützlagern 2 sind über Blattfeder 3 miteinander verbunden, wobei die Achsen 1 und 1' mit den ihnen zugeordneten Rädern 9 und 9' über ein mittiges Lager 16 gegeneinander verschwenkbar sind.
Die Achsen sind über Lenker 4 und 5 gesteuert. Die Rahmenlängsträger 8 sind durch einen Querträger 12 verbunden, auf dem Hubeinrichtungen, z.B. Luftfederbälge 6 angeordnet sind. Diese sind an ihrem oberen Ende mit achsfesten Haltern 13, die der Achse 1' zugeordnet sind, verbunden. Unterhalb der Blattfederstützlager 2 - siehe auch Abbildung 6 - sind Lastdrucksensoren 7 angeordnet, desgleichen auch an der Hubeinrichtung 6, wie auch in den Blattfederlagern, die zur Vorderachse 15 gehörig sind.

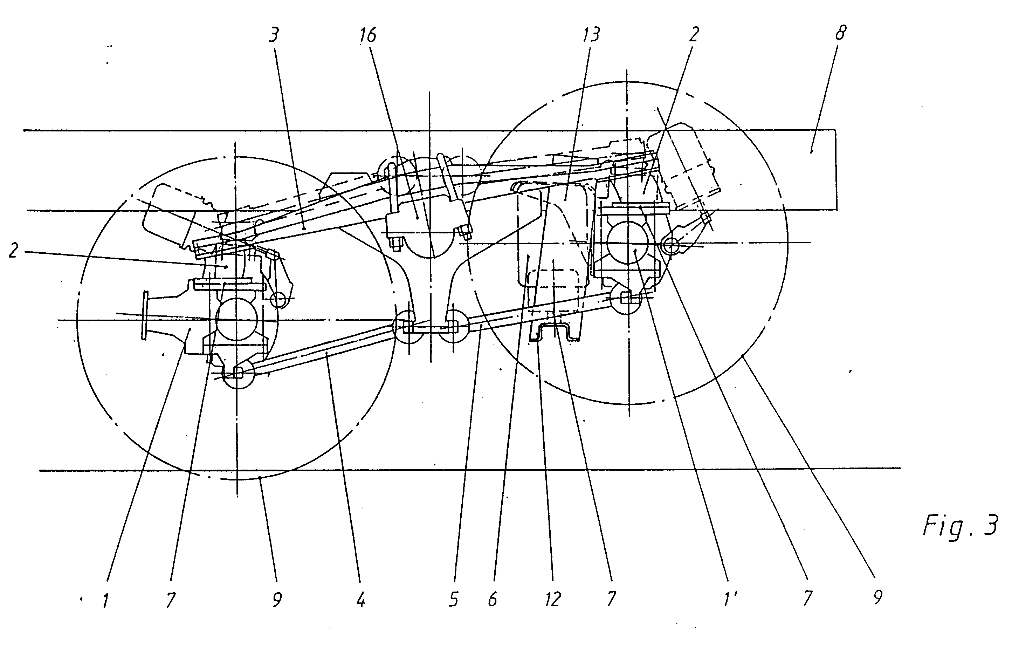

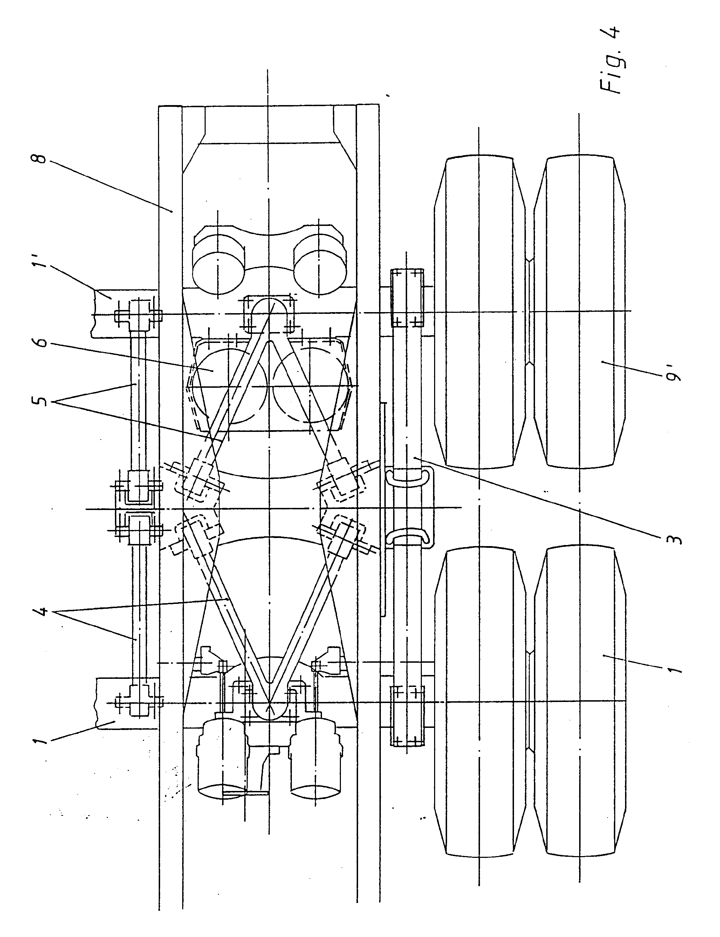

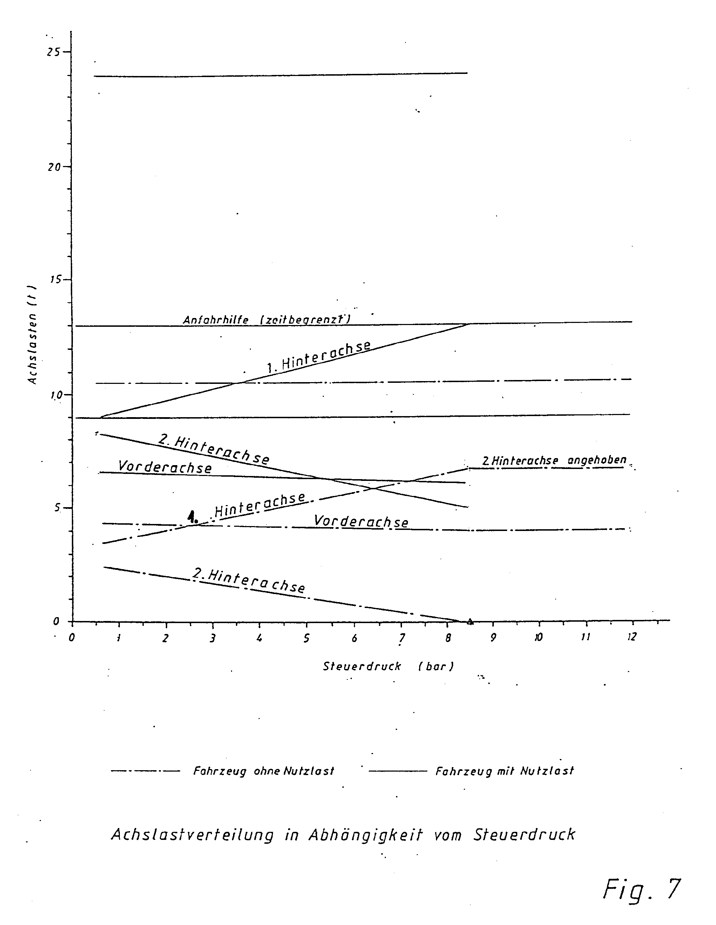

Fig. 2 zeigt den Lkw mit dem erfindungsgemäßen Doppelachsaggregat im angehobenen Zustand der Hubachse 1'. Dies ist Stand der Technik. Das wesentliche an der Erfindung macht aber aus, daß über geeignete Steuerungsmittel und Vergleichseinrichtungen die Achse 1' mit den Rädern 9' stufenlos oder in kleinen Stufen graduell anhebbar ist, so daß mit Hilfe dieses Verfahrens die Traktion an den Rädern 9 der Achse 1 veränderbar ist und somit bestimmten Straßenverhältnissen angepaßt werden kann, z.B. wenn eine erhöhte Traktion auf eisigem oder morastigem Untergrund notwendig ist. Ganz angehoben werden kann die Achse 1' mit den Räder 9', wenn der Lkw mit Leerlast fährt, was dann zur Schonung der Reifen beiträgt. Fig. 3 zeigt das erfindungsgemäße Doppelachsaggregat in angehobenem Zustand der Achse 1' in der vergrößerten Einzelheit. Fig. 4 zeigt das Doppelachsaggregat in der vergrößerten Einzelheit als Draufsicht. Fig. 5 zeigt eine besonders belastende Situation für verschiedene Fahrzeugteile, insbesondere für die Blattfederstützlager, wenn die Achse eine zusätzliche seitliche Einfederung erfährt. Aus Fig. 6 ist die Einzelheit eines erfindungsgemäßen Blattfederstützlagers zu ersehen, bei dem es wesentlich ist, daß die Stabilisierungsbleche 10, wie auch die dazwischenliegenden Gummischichten 11 kugelkalottenförmig oder ähnlich gestaltet sind, um so höchste Eigenstabilität zu gewährleisten und Torsionsbelastungen an den Federenden weitgehend zu vermeiden. Aus dem Diagramm nach Fig. 7 sind zwei grundsätzliche Betriebszustände zu entnehmen, nämlich einmal das Doppelachsaggregat in seiner Funktion als Anfahrhilfe, wobei die zweite, anhebbare Hinterachse 1' entlastet wird und gleichzeitig - siehe Schaubild - die Triebachse 1 im gleichen Maßstab erhöht belastet wird und somit die Traktion ihrer Räder entsprechend vergrößert wird. Im unteren Bereich sind die Verhältnisse bei gänzlich angehobener Hinterache dargestellt. Auch hier verändert sich die Achslast in Abhängigkeit vom Steuerdruck, wobei bei maximalem Steuerdruck die Achslast der zweiten Hinterachse zu Null wird.

## Patentansprüche

1. Nutzfahrzeug, insbesondere Lkw, mit einem Doppelachsaggregat an pendelnd aufgehängten Blattfedern dessen eine Achse als Triebachse antreibbar und dessen andere Achse als Liftachse über Luftfederbälge anhebbar ist, mit Lenkerführung für die Achsen und mit Blattfederstützlagern, wobei die Liftachse über Lastsensoren gesteuert, graduell anhebbar ist, dadurch gekennzeichnet, daß Lastsensoren (7) am Doppelachsaggregat zwischen den Achslagern (14) und den Achsfederstützlagern (2) von Triebachse (1) und Liftachse (1'), an der Abstützung der Luftfederbälge (6) zum Rahmenlängsträger (8) und im Bereich der lenkbaren Vorderachse (15) an den Federstützlagern der dortigen Blattfedern angeordnet sind, daß die Lastsensoren (7) die partielle Belastung der einzelnen Achsen (1; 1'; 15) feststellen und daß eine Steuerung in Auswertung der von den Lastsensoren (7) gelieferten Daten eine gezielt ausgleichende Be- bzw. Entlastung der Achsen (1; 1'; 15) im Sinne einer als solches bekannten Anfahrhilfe und einer Verbesserung der Seitenführungsfähigkeit der lenkbaren Vorderachse bewirkt.

2. Nutzfahrzeug nach Anspruch 1, dadurch gekennzeichnet, daß der Luftdruck in den Luftfederbälgen (6) in Stufen oder stufenlos veränderbar ist.

3. Nutzfahrzeug nach Anspruch 1 oder 2, dadurch gekennzeichnet, daß ein oder mehrere Luftfederbälge (6) auf einem am Rahmenlängsträger (8) angeordneten Querträger (12) befestigt sind und die oberen Enden der Luftfederbälge (6) mit achsfesten Haltern (13) verbunden sind.

## Claims

1. Commercial vehicle, particularly truck, with double axle unit on suspended leaf springs, one of which axles can be driven and the other one lifted by means of air bellows, equipped with an axle location system and leaf spring supporting bearings, the lift axle being controlled via load sensors and raisable in steps, characterised by the fact that the load sensors (7) are located on the double axle unit between the axle bearings (14) and the axle spring supporting bearings (2) for the driven axle (1) and the lift axle (1'), on the support for the air bellows (6) to the main frame member (8) and, in the area of the steerable front axle (15), on the spring supporting bearings for the leaf springs mounted there, that the load sensors (7) ascertain the partial load on the individual axles (1; 1'; 15) and that a control unit evaluating the data supplied by the load sensors (7) triggers a specific compensation operation aimed at loading and unloading the axles (1; 1'; 15) to achieve a moving-off aid of a type already known and an improved cornering stability of the steerable front axle.

2. Commercial vehicle as under Claim 1, characterised by the fact that the air pressure in the air bellows (6) can be varied either in steps or infinitely.

3. Commercial vehicle as under Claim 1 or 2, characterised by the fact that one or several air bellows (6) are mounted on a cross member (12) located on the main frame member (8) and that the upper ends of the air bellows (6) are connected to brackets (13) firmly mounted on the axle.

## Revendications

1. Véhicule utilitaire, en particulier camion, avec sur des ressorts à lames suspendus oscillants, une unité d'essieu tandem dont un essieu en tant qu'essieu moteur est susceptible d'être entraîné, et dont l'autre essieu, en tant qu'essieu levable, est susceptible d'être soulevé par l'intermédiaire de coussins pneumatiques, avec guidage par bielles pour les essieux et avec des paliers de soutien des ressorts à lames, tandis que l'essieu levable, commandé par l'intermédiaire de détecteurs de charge, est susceptible d'être soulevé graduellement, véhicule utilitaire caractérisé en ce que des détecteurs de charge (7) sont disposés sur l'unité d'essieu tandem levable entre les paliers d'essieux (14) et les paliers de supports des ressorts d'essieux (2) de l'essieu moteur (1) et de l'essieu levable (1'), aux appuis des coussins pneumatiques (6) par rapport aux longerons (8) du châssis et au voisinage de l'essieu avant orientable (15) sur les paliers de soutien des ressorts à lames à cet endroit, en ce que les détecteurs de charge (7) déterminent la charge partielle des différents essieux (1; 1'; 15) et en ce qu'une commande, en exploitant les données délivrées par les détecteurs de charge (7) assurent une charge ou une décharge se compensant rationnellement des essieux (1, 1'; 15) dans le sens de ce que l'on appelle une aide au démarrage et d'une amélioration de la stabilité de l'essieu avant orientable.

2. Véhicule utilitaire selon la revendication 1, caractérisé en ce que la pression d'air dans les coussins pneumatiques (6) peut être modifiée par échelons ou de façon continue.

3. Véhicule utilitaire selon la revendication 1 ou la revendication 2, caractérisé en ce qu'un ou plusieurs des coussins pneumatiques (6) sont fixés sur une traverse (12) disposée sur les longerons (8) du châssis, et les extrémités supérieures des coussins pneumatiques (6) sont reliées à des potences (13) solidaires des essieux.
